# EUROPEAN PATENT APPLICATION

(11) **EP 0 942 476 A1**
(43) Date of publication of application: **15.09.1999**
(21) Application number: 98944282.7
(22) Date of filing: 28.09.1998
(51) Int. Cl.: H01M 2/04

(54) **METHOD OF MANUFACTURING A RECTANGULAR BATTERY**

(30) Priority: 30.09.1997 JP 26609397
(71) Applicant: MATSUSHITA ELECTRIC INDUSTRIAL CO., LTD., Kadoma-shi, Osaka 571-0050 (JP)
(72) Inventor: HARAGUCHI, Kazunori, Matsushita Electric, Kadoma-shi, Osaka 571-0050 (JP); YOSHIZAWA, Hiroshi, Matsushita Electric, Kadoma-shi, Osaka 571-0050 (JP); NAKASHIMA, Takuya, Matsushita Electric, Kadoma-shi, Osaka 571-0050 (JP); TAKEUCHI, Takashi, Matsushita Electric, Kadoma-shi, Osaka 571-0050 (JP); SENOO, Kikuo, Matsushita Electric, Kadoma-shi, Osaka 571-0050 (JP)
(74) Representative: Rackham, Stephen Neil
(86) International application number: JP9804354
(87) International publication number: WO9917386

(57) **Abstract**

Method of manufacturing a prismatic battery wherein a sealing plate (2) is placed on the upper open end of a prismatic case (1) in which power generating elements are housed, and laser beams (3a-3d) are directed at an angle upwardly inclined from the horizontal direction to each side (a-d) of the abutment line (4) including each corner (e), by which the abutment line (4) is scanned and welded with each of the laser beams (3a-3d) thereby hermetically sealing the prismatic case (1).

## Description

### TECHNICAL FIELD

The present invention relates to a method of manufacturing prismatic batteries, and more particularly to an improved method for hermetically sealing a prismatic case housing power generating elements by welding a sealing plate on the open end of the prismatic case.

### BACKGROUND ART

By way of example, secondary batteries used as power sources for portable electronic instruments are required to be of a high energy density and, at the same time, are required to be of a shape efficient in terms of space used in order to achieve weight-lightness and compactness. A lithium ion secondary battery which uses a prismatic aluminum casing is attracting the spotlight as a battery which fulfills these requirements.

Because the lithium ion secondary battery, in terms of its structure apart from anything else, is required to be hermetically stable over a long time, a sealing plate is bonded by laser welding to the open end of a prismatic casing formed into a square tube shape with a bottom, thereby sealing its open end. Such laser welding method has a characteristic of excellent operation efficiency as compared with other welding methods, since it causes less thermal effect on the electrolyte and electrically insulated portions housed within the casing.

Conventional methods for manufacturing prismatic batteries by laser welding of the prismatic case and sealing plate include those disclosed in Japanese Patent Laid-open No. 8-315788, Japanese Patent Laid-open No. 8-315789, and Japanese Patent Laid-open No. 8-315790. In these disclosed manufacturing methods, the sealing plate is fitted into the open end of a prismatic case, which is positioned with the open end facing upwards. The laser beam is irradiated from a vertical direction toward the abutment area of the prismatic case and sealing plate; and the abutment area is scanned with the laser beam and welded, whereby the open end of the prismatic case is hermetically sealed with the sealing plate.

However, the prismatic case and the sealing plate are formed of thin plate material because of the requirements for decreased size and weight. When a laser beam is used to weld the abutment area of the sealing plate and prismatic case from the side of the upper opening of the prismatic case, there is a risk of molten metal infiltrating the battery if the amount of penetration is increased. Moreover, the precision to which the prismatic case and sealing plate can be finished does have limits. Even if the amount of penetration during welding is optimized so as not to reach into the battery, penetration may reach into the battery due to variations in the finishing precision of the thin materials. In such a case, molten metal dropping into the battery may cause internal short circuits. Moreover, although laser welding is a welding method which does not have much thermal influence on the electrolytic solution and electrical insulating matter, since the heating is directed towards the battery interior, thermal effects are difficult to eliminate because of limits to welding precision or to the finishing precision of the prismatic case and sealing plate.

The present invention has been devised in view of the foregoing problems in the prior art. It is an object of the present invention to provide a method of manufacturing prismatic batteries with which the prismatic case and sealing plate are joined by a uniform weld and without thermal effects on the interior of the battery.

### DISCLOSURE OF THE INVENTION

In order to achieve the above said object, the manufacturing method according to a first aspect of the present invention consists in a method of manufacturing a prismatic battery wherein power generating elements are housed in a prismatic case formed into a square tube shape with a bottom having a square opening configuration including four straight sides and curved corners of a prescribed radius, and a sealing plate is laser welded to the open end of the prismatic case, thereby sealing the open end of the prismatic case with the sealing plate, and is characterized in that: the sealing plate is abutted to the upper open end of the prismatic case; laser beams irradiated from a lateral side of the prismatic case are directed at an upward angle to an abutment line where the prismatic case and the sealing plate are abutted with each other; and the abutment line is scanned with the laser beams, whereby the prismatic case and the sealing plate are welded together.

According to the above manufacturing method, the laser beams are directed at an upwards angle toward the abutment line where the sealing plate meets the upper open end of the prismatic case. The laser welding penetration is thus directed towards the sealing plate, thereby preventing penetration from reaching into the battery, even when the penetration is greater than the thickness of the prismatic case. Although the amount of penetration due to laser welding is controlled such as to be uniform, it is difficult to maintain a uniform amount of penetration with respect to the thin plate material. However, due to such orientation of the laser beam irradiation direction, even when penetration exceeds plate thickness due to variations in the thickness of the prismatic case, penetration in excess of the thickness of the prismatic case is directed towards the sealing plate, whereby molten spatter is prevented from dropping into the battery which will result in defective batteries due to internal short circuits.

Also, the manufacturing method according to a second aspect of the present invention consists in a method of manufacturing a prismatic battery wherein power generating elements are housed in a prismatic case formed into a square tube shape with a bottom having a square opening configuration including four straight sides and curved corners of a prescribed radius, and a sealing plate is laser welded to the open end of the prismatic case, thereby sealing the open end of the prismatic case with the sealing plate, and is characterized in that: the sealing plate is formed with a recessed portion that fits in the upper open end of the prismatic case; the sealing plate is abutted with the prismatic case in a state such that said recessed portion of the sealing plate is fitted into the upper open end of the prismatic case; a laser beam irradiated from a lateral direction of the prismatic case is directed to an abutment line where the prismatic case and the periphery of the sealing plate are abutted with each other; and the abutment line is scanned with the laser beam, whereby the prismatic case and the sealing plate are welded together.

According to the above manufacturing method, the sealing plate is abutted onto the upper open end of the prismatic case such that the recessed portion formed in the sealing plate is fitted into the upper open end of the prismatic case. As a result, the inner side of the abutment line where the sealing plate meets the prismatic case at the periphery is covered with the above mentioned recessed portion. Spatter is therefore prevented from infiltrating the battery when the abutment line is scanned and welded with laser beams from a direction sideways to the prismatic case. Even when penetration due to laser welding is in excess of the thickness of the prismatic case, the penetration in excess of material thickness is directed towards the recessed portion, whereby molten metal due to welding is prevented from infiltrating the battery.

### BRIEF DESCRIPTION OF THE DRAWINGS

Fig. 1 is a perspective view of a prismatic battery according to a first embodiment of the present invention;
Fig. 2 is a plan view of the open end of a prismatic case;
Fig. 3(a) is a plan view showing the scanning direction of a laser beam for each side in relation to the abutment line, and Fig. 3(b) is a side view showing the incident angle of the laser beam in relation to the abutment line;
Fig. 4 is a diagram to explain the effects of inclining the incident direction of the laser beam;
Fig. 5 is a perspective view showing the outer appearance of the prismatic battery according to a second embodiment of the present invention;
Fig. 6 is a partial cross sectional view showing the structure of the sealing plate formed with an engagement portion;
Fig. 7 is a diagram to explain the occurrence of difference in focal distance of laser beam at the corners; and
Fig. 8 is a plan view showing variations of the laser beam orientation to prevent damage due to the reflection of the laser beam.

### BEST MODES FOR CARRYING OUT THE INVENTION

Preferred embodiments of the present invention will be hereinafter described with reference to the accompanying drawings for the understanding of the present invention.

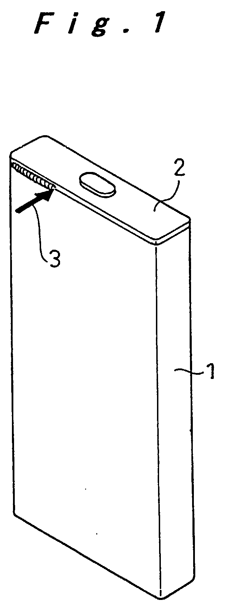

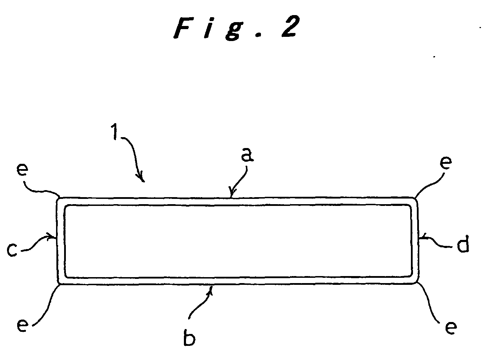

Fig. 1 shows the outer appearance of a prismatic battery according to a first embodiment of the present invention. The prismatic battery is manufactured by bonding a sealing plate 2 onto the open end of a prismatic case 1 housing power generating elements by welding thus hermetically sealing the prismatic case 1. The prismatic case 1 is formed into a square tube shape with a bottom such that its planar configuration at the open end thereof appears as shown in Fig. 2, wherein the longer sides a, b and the shorter sides c, d are straight lines while each of the corners e is curved with a prescribed radius.

The sealing plate 2 is formed with external dimensions equal to those of the open end of this prismatic case. The sealing plate 2 is mounted on the open end of the prismatic case 1 and the open end of the prismatic case 1 is hermetically sealed with the sealing plate 2 by the laser welding of the abutment line where each of the straight sides a-d is joined by the curve of each corner e. The method for welding the sealing plate 2 to the open end of the prismatic case 1 is explained below.

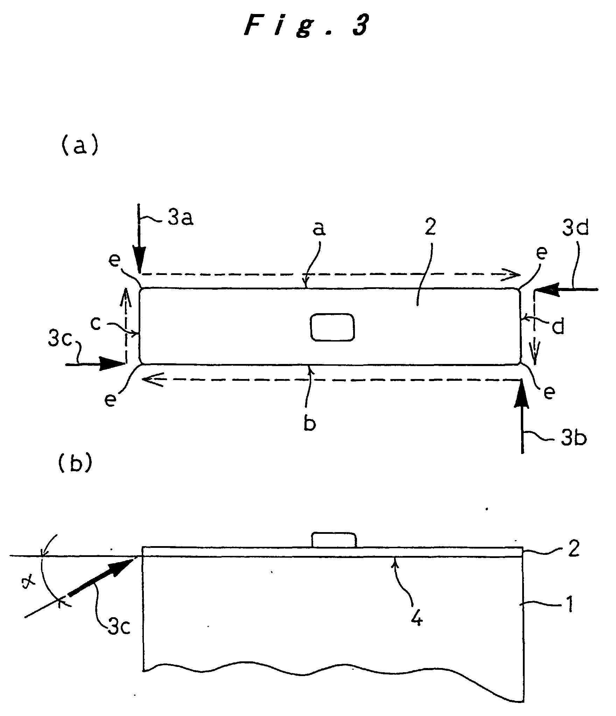

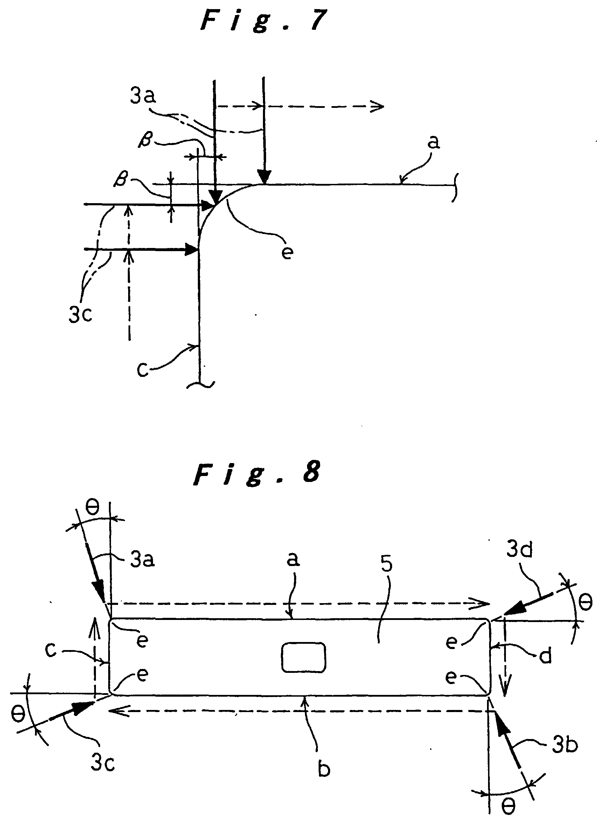

Fig. 3(a) shows the state, as seen from above, where the prismatic case 1 is in a prescribed position, vertical with the open end facing upwards and the sealing plate 2 placed over the open end. As shown in Fig. 3(b), laser beams 3a-3d are directed towards the abutment line 4 of the prismatic case 1 and the sealing plate 2. Each laser beam 3a-3d scans parallel to the long sides a, b and short sides c, d and welds the abutment line 4; and the open end of the prismatic case 1 is hermetically sealed with the sealing plate 2. In this way, the scanning direction of each of the laser beams 3a-3d is collinear with each of the straight sides a-d. Control of the movement is therefore easy and a precise welding action can be carried out. Also, as shown in Fig. 3(b), the direction of irradiated laser beams 3 is set such as to be upwards at an angle α in relation to the horizontal plane when scanning the abutment line 4. Moreover, as shown in the plan view of Fig. 3(a), the laser beams 3 are irradiated perpendicular to the above mentioned abutment line 4. However, as discussed below with reference to Fig. 8, the irradiation angle of each of the laser beams 3a-3d may also be tilted at an angle θ, when viewed in plan, from a direction perpendicular to each side a, b, c, d.

In this way, by directing the laser beams 3a-3d upwards at an angle α from the horizontal direction to the abutment line 4, thermal effects of laser welding are prevented from reaching into the battery. According to the laser welding in this embodiment, since welding is performed from a lateral side with respect to the upper end of the prismatic case 1 housing the power generating elements, thermal effects of laser welding will hardly reach the interior of the battery. Even in the case where penetration reaches the interior of the battery caused by irregularities in the material thickness of the prismatic case, such inclination of the laser irradiation angle in this embodiment is effective.

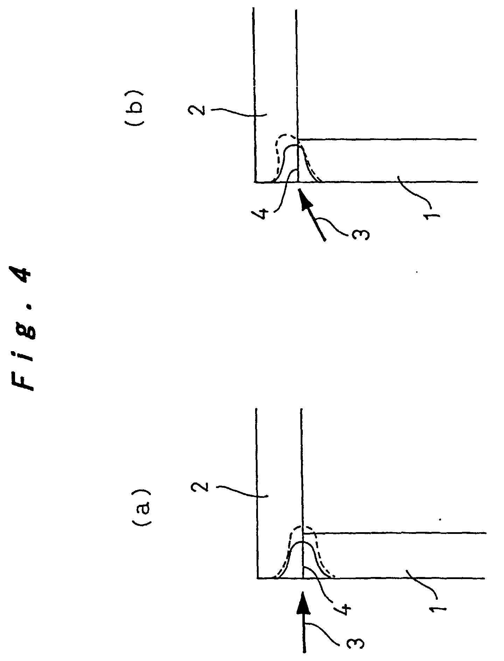

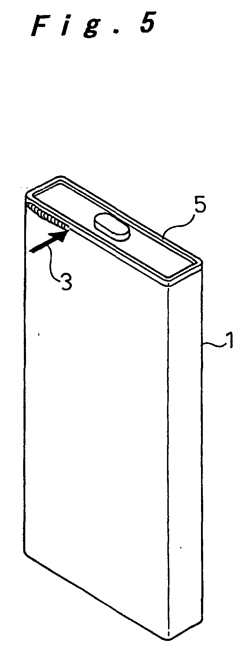

Since the prismatic case 1 and sealing plate 2 are formed of thin aluminum sheets in order for the battery to be thin and light, these must be welded precisely. However, there are limits to the precision to which these can be finished. In particular, since the prismatic case 1 is drawn into a tubular shape having a bottom, variations in thickness occur easily. As a result, even if the amount of penetration of the abutment line 4 by the laser beams 3a-3d is predetermined to be uniform, penetration may still reach into the battery because of the variations in thickness. Fig. 4 shows in cross sections the state of the abutment line 4 when subjected to laser welding. When the laser beam 3 is directed from a direction horizontal to the abutment line 4 as shown in Fig. 4(a), penetration can reach into the battery as shown by the dotted lines due to variations in thickness as explained above. Since the power generating elements are housed within the battery, when penetration reaches into the battery, spatter from the melting of the prismatic case 1 and sealing plate 2 can get into the battery and may result in the battery being defective because of internal short circuits. Thus, the direction of the laser beam 3 is inclined at an upward angle to the abutment line 4 as shown in Fig. 4(b). In this way, since the penetration advances towards the sealing plate 2, even deep penetration does not reach into the battery as shown by the dotted lines and spatter due to variations in thickness is prevented from getting into the battery.

In the procedure for laser welding, the welding actions for each side a, b, c, d including the corners e can be carried out at the same time by scanning with four laser beams 3a, 3b, 3c, 3d in lines parallel to the long sides a, b and short sides c, d. Thus, welding can be carried out efficiently and without slippage of the sealing plate 2, even when the mounted sealing plate 2 is not temporarily tacked onto the prismatic case 1. Also, two opposite sides, such as the short sides c, d including the corners e, can be welded at the same time, and then the remaining two sides including the corners e can be welded at the same time or sequentially. If the sealing plate 2 is temporarily tacked onto the prismatic case 1 to prevent slippage, welding can be sequentially performed starting from one side including a given one of corners e.

Next, the method of manufacturing a prismatic battery according to a second embodiment of the present invention is explained.

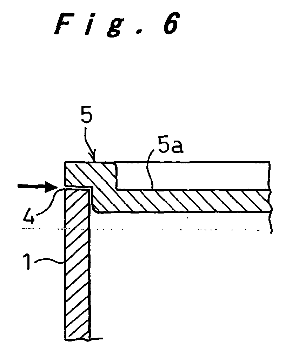

The prismatic battery according to the second embodiment shown in Fig. 5 is constructed such that the sealing plate 5 is formed with an engagement portion 5a that fits into the open end of the prismatic case, and the prismatic case is hermetically sealed by laser welding the sealing plate 5 to the open end of the prismatic case 1.

As shown in Fig. 5, the engagement portion (recessed portion) 5a that fits into the open end of the prismatic case 1 is formed in the sealing plate 5 by recessing a portion excluding the periphery. The engagement portion 5a of the above mentioned sealing plate 5 is fitted into the open end of the prismatic case 1 as shown by a partial cross section in Fig. 6. As shown, when a laser beam 3 is irradiated from a lateral side of the prismatic case 1 to weld the abutment line 4 where the prismatic case 1 meets the sealing plate 5, in the case of gaps occurring in the abutment line 4 due to finishing errors, or when the amount of penetration exceeds the thickness of the prismatic case 1, molten spatter does not drop into the battery because the inner side of the abutment line 4 is blocked by the engagement portion 5a.

Laser welding is carried out similarly as in the first embodiment shown in Fig. 3(a) by scanning the abutment line 4 with laser beams 3a-3d in lines parallel to each of the sides a, b, c, d. In the present embodiment, since the inner side of the abutment line 4 is blocked by the engagement portion 5a as shown in Fig. 6, the irradiation direction of laser beams 3 need not be angled upwards as in the first embodiment, and the laser beams can be directed straight towards the abutment line 4 from the sides of the prismatic case 1. Nevertheless it is of course more effective, with this sealing plate 5, too, to direct the laser beams 3a-3d at an upward angle.

In the first and second embodiments explained above, the focal points of the laser beams 3 become more distant at each corner e formed by a curve when the laser beams 3 are scanned parallel to each side a, b, c, d. This decreases the capacity of laser welding at the corners e. In other words, as shown in Fig. 7, with respect to the laser beam 3a, there will be a maximum distance differential β between the focal point of the laser beam 3a at the scanning start position on the curve of the corner e and that at the position for scanning the long side a. Similarly, at the scanning end position, i.e., with respect to the laser beam 3c as shown in Fig. 7, there will be a maximum distance differential β between the focal point of the laser beam 3c at the scanning end position and that at the position for scanning the short side c. The decrease in weld strength for the corners e due to this distance differential β is resolved with the welding methods shown below.

A first method is to vary laser output at the points where the laser beams 3a-3d scan the corners e corresponding to the distance differential with respect to each of the sides a-d. In other words, the increase in laser output can compensate for the decreased welding capacity at the corners e where the focal point becomes distant, and a uniform weld can therefore be made along the entire abutment line 4.

A second method is to vary the laser pulse irradiation intervals at the points where the laser beams 3a-3d scan the corners e corresponding to the distance differential with respect to each of the sides a-d. In other words, the laser pulse irradiation intervals are decreased as the distance differential increases, so that the laser pulse irradiation intervals are caused to become shorter in the direction in which the distance differential increases. By varying the laser pulse irradiation intervals in this way, the distance differential is compensated for by the amount of irradiation per unit time of the laser beams 3. Thus, a uniform weld can be made along the entire abutment line 4.

Furthermore, in the second embodiment, irradiation angle of each of the laser beams 3a-3d in the horizontal direction is inclined at an angle θ from the directions perpendicular to each of the sides a, b, c, d as shown in Fig. 8. As a result, the light reflected when the laser beams 3 are directed towards the abutment line 4 does not return to the sources of the laser beams, whereby damage to the sources of the laser beams due to reflected light is prevented. Also, the angle of incidence of the laser beams 3 in relation to the corners e can be increased because of this inclination of laser irradiation direction towards the scanning line. The reflection of the laser beams 3 is therefore low and the efficiency of laser welding can be increased.

### INDUSTRIAL APPLICABILITY

As set forth above, according to the welding method of the present invention, penetration due to welding becomes directed from the side of the battery toward the side of the sealing plate. As a result, spatter due to welding does not get into the battery even when penetration exceeds the thickness of the prismatic case because of the fact that the material is thin, whereby the occurrence of internal short circuits caused by spatter can be resolved.

Also, in another welding method wherein the abutment line is scanned with laser beams irradiated from a side of the prismatic case with the sealing plate abutted onto the upper open end of the prismatic case under a state that an engagement portion of the sealing plate is fitted into the upper open end of the prismatic case, the inner side of the abutment line is blocked by the engagement portion of the sealing plate. As a result, molten spatter is prevented from dropping into the battery, even when there are gaps in the abutment line due to finishing errors, or when the amount of penetration is greater than the thickness of the prismatic case, whereby internal short circuits due to spatter infiltrating the battery do not occur. Consequently, the present invention is useful as a technical measure for responding to the needs for preventing battery defects with internal short circuits and for batteries that are hermetically stable over a long period of time.

## Claims

1. A method of manufacturing a prismatic battery wherein power generating elements are housed in a prismatic case (1) formed into a square tube shape with a bottom having a square opening configuration including four straight sides (a, b, c, d) and curved corners (e) of a prescribed radius, and a sealing plate (2) is laser welded to the open end of the prismatic case (1), thereby sealing the open end of the prismatic case (1) with the sealing plate (2), characterized in that:
the sealing plate (2) is abutted to the upper open end of the prismatic case (1);
laser beams (3a-3d) irradiated from a lateral side of the prismatic case (1) are directed at an upward angle to an abutment line (4) where the prismatic case (1) and the sealing plate (2) are abutted with each other; and
the abutment line (4) is scanned with the laser beams (3a-3d), whereby the prismatic case (1) and the sealing plate (2) are welded together.

2. A method of manufacturing a prismatic battery wherein power generating elements are housed in a prismatic case (1) formed into a square tube shape with a bottom having a square opening configuration including four straight sides (a, b, c, d) and curved corners (e) of a prescribed radius, and a sealing plate (5) is laser welded to the open end of the prismatic case (1), thereby sealing the open end of the prismatic case (1) with the sealing plate (5), characterized in that:
the sealing plate (5) is formed with a recessed portion (5a) that fits in the upper open end of the prismatic case (1);
the sealing plate (5) is abutted with the prismatic case (1) in a state such that said recessed portion (5a) of the sealing plate (5) is fitted into the upper open end of the prismatic case (1);
a laser beam (3) irradiated from a lateral direction of the prismatic case (1) is directed to an abutment line (4) where the prismatic case (1) and the periphery of the sealing plate (5) are abutted with each other; and
the abutment line (4) is scanned with the laser beam (3), whereby the prismatic case (1) and the sealing plate (5) are welded together.
